# EUROPÄISCHE PATENTSCHRIFT

(11) **EP 1 243 637 B1**
(45) Veröffentlichungstag und Bekanntmachung des Hinweises auf die Patenterteilung: **15.08.2007**
(21) Anmeldenummer: 02005587.7
(22) Anmeldetag: 12.03.2002
(51) Int. Cl.: C10L 3/06, E21B 37/06

(54) **Additive zur Inhibierung der Gashydratbildung**
Additives for inhibiting gas hydrate formation
Additifs pour inhiber la formation d'hydrates de gaz

(30) Priorität: 24.03.2001 DE 10114638
(43) Veröffentlichungstag der Anmeldung: 25.09.2002
(73) Patentinhaber: Clariant Produkte (Deutschland) GmbH, 65929 Frankfurt am Main (DE)
(72) Erfinder: Klug, Peter, Dr., 63762 Grossostheim (DE); Dahlmann, Uwe, Dr., 69126 Heidelberg (DE); Feustel, Michael, Dr., 55278 Köngernheim (DE)

(56) Entgegenhaltungen:
- EP-A- 1 050 567
- WO-A-96/08456
- GB-A- 2 349 889
- US-A- 6 152 993

## Beschreibung

Die vorliegende Erfindung betrifft ein Additiv und ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge eines Inhibitors zugegeben wird, der Ester von alkoxylierten Hydroxycarbonsäureamiden enthält.

Gashydrate sind kristalline Einschlussverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst ist thermodynamisch instabil und wird erst durch die Einbindung von Gasmolekülen stabilisiert. Diese eisähnlichen Verbindungen können in Abhängigkeit von Druck und Gaszusammensetzung auch über den Gefrierpunkt von Wasser (bis über 25°C) hinaus existieren.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Nassgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung verschiedenster Fördereinrichtungen, wie Pipelines, Ventilen oder Produktionseinrichtungen, in denen über längere Strecken bei niedrigeren Temperaturen Nassgas oder Mehrphasengemische transportiert werden, wie dies speziell in kälteren Regionen der Erde oder auf dem Meeresboden vorkommt.

Außerdem kann die Gashydratbildung auch beim Bohrvorgang zur Erschließung neuer Gas- oder Erdöllagerstätten bei entsprechenden Druck- und Temperaturverhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (mehr als 10 Gew.-% bezüglich des Gewichts der Wasserphase) niederen Alkoholen, wie Methanol, Glykol oder Diethylenglykol unterdrückt werden. Der Zusatz dieser Additive bewirkt, dass die thermodynamische Grenze der Gashydratbildung nach niedrigeren Temperaturen und höheren Drücken verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittels) und dementsprechend hohe Kosten, speziell in der offshore-Förderung, verursacht.

Heute versucht man deshalb, thermodynamische Inhibitoren zu ersetzen, indem man bei Temperatur- und Druckbereichen, in denen sich Gashydrate bilden können, Additive in Mengen < 2 % zusetzt, die die Gashydratbildung entweder zeitlich hinauszögern (kinetische Inhibitoren) oder die Gashydratagglomerate klein und damit pumpbar halten, so dass diese durch die Pipeline transportiert werden können (sog. Agglomerat-Inhibitoren oder Anti-Agglomerates). Die dabei eingesetzten Inhibitoren behindern dabei entweder die Keimbildung und/oder das Wachstum der Gashydratpartikel oder modifizieren das Hydratwachstum derart, dass kleinere Hydratpartikel resultieren.

Als Gashydratinhibitoren wurden in der Patentliteratur neben den bekannten thermodynamischen Inhibitoren eine Vielzahl monomerer als auch polymerer Substanzklassen beschrieben, die kinetische Inhibitoren oder Agglomeratinhibitoren darstellen. Von besonderer Bedeutung sind hierbei Polymere mit Kohlenstoff-Backbone, die in den Seitengruppen sowohl cyclische (Pyrrolidon- oder Caprolactamreste) als auch acyclische Amidstrukturen enthalten. Des weiteren sind oberflächenaktive Verbindungen mit sowohl nichtionischer als auch kationischer Struktur für die Anwendung als Gashydratinhibitor bekannt.

Um Gashydratinhibitoren auch bei stärkerer Unterkühlung als zur Zeit möglich, d.h. weiter innerhalb der Hydratregion einsetzen zu können, bedarf es einer weiteren Wirkungssteigerung im Vergleich zu den Hydratinhibitoren des Standes der Technik.

DE-C-199 20 152 beschreibt modifizierte Polyglykol-Ethercarbonsäure-Amide als Additive zur Inhibierung der Gashydratbildung, die je nach Struktur eine breite Wirksamkeit zeigen und sowohl die Keimbildung bzw. das Wachstum oder die Agglomeration von Gashydraten verhindern. Die offenbarten Verbindungen zeigen jedoch eine schlechte biologische Abbaubarkeit, die dem Einsatz vor allem bei OffShore-Anwendungen entgegenstehen.

GB-A-2 349 889 offenbart einen Gashydratinhibitor auf der Grundlage von Amiden mit einem Molekulargewicht von bis zu 1000 g/mol, in welchen das Amidstickstoffatom mit C₁- bis C₅-Kohlenwasserstoffresten substituiert ist, und die mindestens einen C₆- bis C₂₄-Alkyl- oder Alkenylrest tragen.

Aufgabe der vorliegenden Erfindung war es also, verbesserte Additive zu finden, die vollständig biologisch abbaubar sind und ein breites Anwendungsspektrum mit hohem Wirkpotential besitzen, um sowohl die Bildung von Gashydraten zu verlangsamen (kinetische Inhibitoren) als auch Gashydratagglomerate klein und pumpbar zu halten (Anti-Agglomerates).

Wie nun überraschenderweise gefunden wurde, eignen sich sowohl wasserlösliche als auch öllösliche Ester von alkoxylierten Hydroxycarbonsäureamiden als Gashydratinhibitoren. Die Produkte können je nach Struktur sowohl die Keimbildung und Wachstum von Gashydraten verzögern (kinetische Gashydratinhibitoren) als auch die Agglomeration von Gashydraten unterdrücken (Agglomerat-Inhibitoren). Die Produkte sind aufgrund der hydrolysierbaren Esterfunktion leicht biologisch abbaubar.

Gegenstand der Erfindung ist daher die Verwendung von Verbindungen der Formel (1) 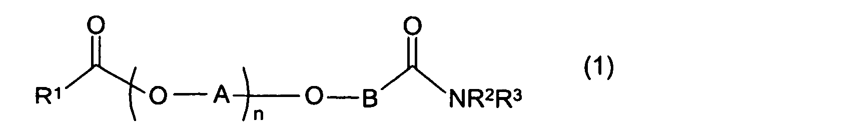 worin
- R¹: C₁- bis C₂₄-Alkyl, C₂- bis C₂₄-Alkenyl oder einen C₆- bis C₁₈-Arylrest, der mit einer C₁- bis C₁₂-Alkylgruppe substituiert sein kann,
- R², R³ unabhängig: voneinander Wasserstoff, C₁- bis C₁₈-Alkyl, C₅- bis C₇-Cycloalkyl, oder R² und R³, unter Einschluss des Stickstoffatoms, an das sie gebunden sind, einen Ring von 4 bis 8 Ringatomen, in dem außer Kohlenstoff auch Sauerstoff- oder Stickstoffatome enthalten sein können,
- A: gleichartige oder verschiedene C₂- bis C₄-Alkylenreste,
- B: C₁- bis C₇-Alkylen,
- n: eine ganze Zahl von 1 - 40, vorzugsweise von 2 bis 10
bedeuten, als Gashydratinhibitoren.

Je nach Art der im folgenden beschriebenen Anwendung bedeutet R¹ vorzugsweise C₁- bis C₈-Alkyl oder C₈- bis C₂₄-Alkyl. R² und R³ stehen vorzugsweise für Wasserstoff oder C₁- bis C₆-Alkyl.

A steht für eine oder verschiedene C₂- bis C₄-Alkylengruppen. Das heißt, dass die Verbindungen der Formel (1) mit bis zu 40 C₂- bis C₄-Alkoxyeinheiten alkoxyliert sein können, wobei es sich dabei sowohl um eine reine Ethoxylierung, Propoxylierung oder Butoxylierung handeln kann oder um eine Mischalkoxylierung. Vorzugsweise handelt es sich bei A um eine Ethylen- oder Propylengruppe, insbesondere um eine Ethylengruppe. In einer bevorzugten Ausführungsform steht A für einen Ethylenrest und n für eine ganze Zahl von 1 bis 10.

B steht für eine C₁-C₇-Alkylengruppe, die sowohl geradkettig als auch verzweigt und die an jedem beliebigen Kohlenstoffatom durch die Etherfunktion mit dem Rest des Moleküls verknüpft sein kann. Vorzugsweise handelt es sich bei B um eine Methylen-, Ethylen- oder Propylengruppe, insbesondere um eine Methylengruppe. Ist B verzweigt, so ist es vorzugsweise über die Etherfunktion terminal verknüpft, d.h. dass die zwischen der Amid- und der Etherfunktion liegende Polymethylengruppe vorzugsweise mehr Kohlenstoffatome aufweist als die Alkylseitenketten.

Die Verbindungen der Formel (1) sind durch Alkoxylierung von Hydroxycarbonsäureamiden und deren anschließende Veresterung mit entsprechenden Carbonsäuren, Carbonsäureanhydriden bzw. Carbonsäurechloriden zugänglich. Die für die Herstellung der erfindungsgemäßen Verbindungen benötigten Hydroxycarbonsäureamide sind aus Hydroxycarbonsäuren bzw. aus den entsprechenden Lactonen durch Amidierung mit entsprechenden Aminen erhältlich. Veresterung, Amidierung als auch Alkoxylierung erfolgt nach literaturbekannten Verfahren.

Beispiele für geeignete Carbonsäuren sind Essigsäure, Propionsäure, Buttersäure, Valeriansäure, iso-Valeriansäure, Hexansäure, 2-Ethylhexansäure, Nonansäure, iso-Nonansäure, Decansäure, iso-Decansäure, Dodecansäure, Tetradecansäure, Hexadecansäure, Octadecansäure, Ölsäure, deren Anhydride bzw. Säurechloride und synthetische oder native Fettsäureschnitte.

Zweckmäßig einzusetzende Hydroxycarbonsäuren oder Lactone sind Glykolsäure, Milchsäure, 2-Hydroxy-iso-buttersäure, 2-Hydroxy-iso-capronsäure, Propiolacton, Butyrolacton und Caprolacton.

Geeignete Amine für die Amidierung der Hydroxycarbonsäuren bzw. der entsprechenden Lactone sind Amine mit 1 bis 7 Kohlenstoffatomen wie Methylamin, Ethylamin, Propylamin, n-Butylamin, iso-Butylamin, sec.-Butylamin, Pentylamin, Hexylamin, Dimethylamin, Diethylamin, Dipropylamin, Dibutylamin, Diisopropylamin, Cyclopentylamin, Cyclohexylamin, Pyrrolidin, Piperidin oder Morpholin. Besonders geeignet sind Amine mit C₃-C₅-Alkylresten oder cyclische Amine mit 5 bis 7 Ringgliedern. Besonders bevorzugt sind Diethylamin, iso-Propylamin, iso-Butylamin, iso-Pentylamin, Cyclopentylamin, Piperidin und Pyrrolidin. Die Amidierung kann mit oder ohne Einsatz von Katalysatoren bei Reaktionstemperaturen zwischen 80 und 200 °C, bevorzugt zwischen 100 und 180 °C erfolgen.

In Abhängigkeit von der Struktur gemäß Formel (1) lassen sich die Eigenschaften der Verbindungen derart modifizieren, dass sie gezielt, entsprechend den gegebenen Bedingungen, als spezifische Additive die Gashydratbildung hemmen können.

Bei kurzem Alkylrest R¹ (ca. C₁ bis C₈) bzw. bei hohem Ethylenoxidgehalt erhält man wasserlösliche Produkte, die die Keimbildung der Gashydrate unterdrücken und als kinetische Inhibitoren wirken bzw. die Wirkung anderer kinetischer Inhibitoren als synergistische Komponenten verstärken können, wie in den beigefügten Beispielen gezeigt wird. Unter wasserlöslich werden hier solche Stoffe verstanden, von denen mindestens 5 g in 1 I Wasser klar löslich sind.

Bei längerem Alkylrest R¹ (ca. C₈ bis C₂₄) bzw. bei geringeren Gehalten an Ethylenoxid erhält man hydrophobere/lipophilere, bedingt öllösliche Verbindungen mit tensidischem Charakter, die die Oberfläche von Gashydratpartikeln mit Öl benetzen und damit die Zusammenlagerung der Hydrate behindern. Sie fungieren somit als Agglomerat-Inhibitoren. Die Agglomerat-Inhibitoren sind in der Kondensatphase des Mehrphasengemisches im allgemeinen zumindest teilweise löslich. Unter bedingt öllöslich werden hier Stoffe verstanden, von denen mindestens 1 g in Solvent Naphtha klar löslich ist.

Als alkoholisches Lösungsmittel für die erfindungsgemäßen Verbindungen eignen sich wasserlösliche Monoalkohole, wie z. B. Propanole, Butanole sowie oxethylierte Monoalkohole wie Butylglykol, Isobutylglykol, Butyldiglykol und Polyglykole. Es bilden sich im allgemeinen klare Lösungen.

Die Verbindungen können alleine oder in Kombination mit anderen bekannten Gashydratinhibitoren eingesetzt werden. Im allgemeinen wird man dem zur Hydratbildung neigenden System soviel des erfindungsgemäßen Gashydratinhibitors zusetzen, dass man unter den gegebenen Druck- und Temperaturbedingungen eine ausreichende Inhibierung erhält. Die erfindungsgemäßen Gashydratinhibitoren werden im allgemeinen in Mengen zwischen 0,01 und 2 Gew.-% (bezogen auf das Gewicht der wässrigen Phase), entsprechend 100 bis 20.000 ppm, vorzugsweise 0,02 bis 1 Gew.-% verwendet. Werden die erfindungsgemäßen Gashydratinhibitoren in Mischung mit anderen Gashydratinhibitoren verwendet, so beträgt die Konzentration der Mischung 0,01 bis 2 bzw. 0,02 bis 1 Gew.-% in der wässrigen Phase.

Besonders geeignet als Gashydratinhibitoren und somit eine bevorzugte Ausführungsform dieser Erfindung sind auch Mischungen der Verbindungen gemäß Formel (1) mit einem oder mehreren Polymeren mit einem durch Polymerisation erhaltenen Kohlenstoff-Backbone und Amidbindungen in den Seitenketten. Hierzu zählen besonders Polymere wie Polyvinylpyrrolidon, Polyvinylcaprolactam, Polyisopropylacrylamid, Polyacryloylpyrrolidin, Copolymere aus Vinylpyrrolidon und Vinylcaprolactam, Copolymere aus Vinylcaprolactam und N-Methyl-N-Vinylacetamid sowie Terpolymere von Vinylpyrrolidon, Vinylcaprolactam und weiteren anionischen, kationischen und neutralen Comonomeren mit vinylischer Doppelbindung wie 2-Dimethylaminomethacrylat, 1-Olefinen, N-Alkylacrylamiden, N-Vinylacetamid, Acrylamid, Natrium-2-acrylamido-2-methyl-1-propansulfonat (AMPS) oder Acrylsäure. Weiterhin sind auch Mischungen mit Homo- und Copolymeren von N,N-Dialkylacrylamiden wie N-Acryloylpyrrolidin, N-Acryloylmorpholin und N-Acryloylpiperidin oder N-Alkylacrylamiden wie Isopropylacrylamid sowie Homo- als auch Copolymere von alkoxyalkylsubstituierte (Meth)Acrylsäureester geeignet. Ebenfalls sind Mischungen mit Alkylpolyglykosiden, Hydroxyethylcellulose, Carboxymethylcellulose sowie anderen ionischen oder nichtionischen Tensidmolekülen geeignet.

In einer bevorzugten Ausführungsform der Erfindung werden die erfindungsgemäßen Gashydratinhibitoren in Mischung mit Polymeren verwendet, die in WO-A-96/08672 offenbart sind. Es handelt sich bei diesen Polymeren um solche, die Struktureinheiten der Formel 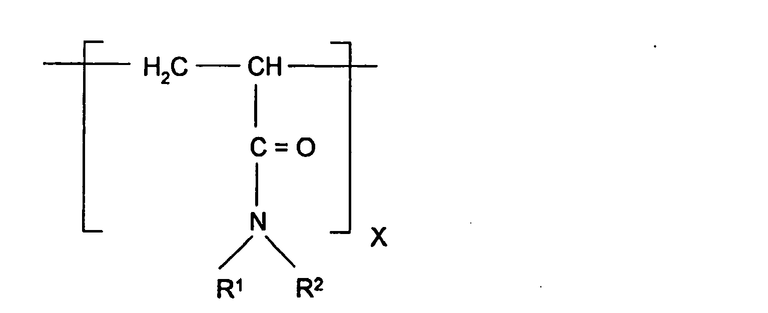 aufweisen, worin R¹ für eine Kohlenwasserstoffgruppe mit 1 bis 10 Kohlenstoffatomen und 0 bis 4 Heteroatomen, ausgewählt aus N, O und S,
R² für eine Kohlenwasserstoffgruppe gleicher Definition wie R¹ und
X für die durchschnittliche Zahl der sich wiederholenden Einheiten steht, wobei letztere so bemessen ist, dass das Polymer ein Molekulargewicht von 1.000 bis 6.000.000 aufweist. Für die Verwendung im Umfang vorliegender Erfindung sind Polyisopropylacrylamide und Polyacryloylpyrrolidine besonders gut geeignet.

In einer weiteren bevorzugten Ausführungsform der Erfindung werden die erfindungsgemäßen Gashydratinhibitoren in Mischung mit Polymeren verwendet, die in WO-A-96/41785 offenbart sind. Dieses Dokument offenbart Gashydratinhibitoren, umfassend Struktureinheiten der Formel 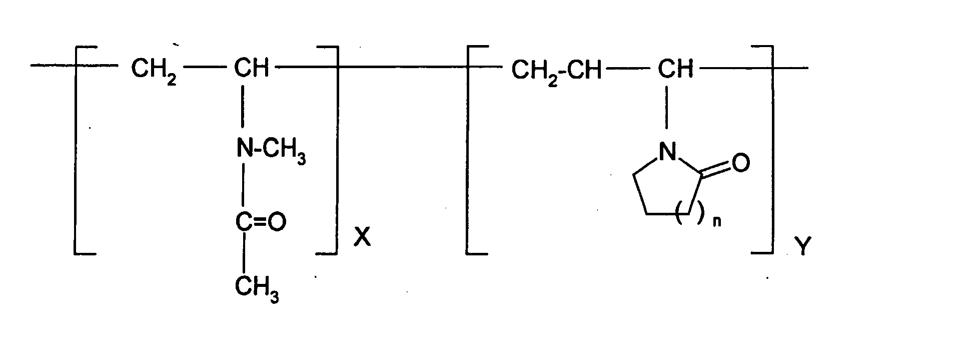 worin n eine Zahl von 1 bis 3 ist und x und y die Zahl der repetitiven Einheiten darstellen, die so bemessen ist, dass das Molekulargewicht des Polymeren zwischen 1.000 und 6.000.000 liegt. Für die Verwendung im Umfang vorliegender Erfindung sind Copolymere aus N-Vinylcaprolactam und N-Vinyl-N-Methylacetamid oder Vinylpyrrolidon besonders gut geeignet.

In einer weiteren bevorzugten Ausführungsform der Erfindung werden die erfindungsgemäßen Gashydratinhibitoren in Mischung mit anderen Polymeren verwendet, die in WO-A-94/12761 offenbart sind. Das Dokument offenbart Additive zur Verhinderung der Bildung von Gashydraten, welche Polymere, umfassend cyclische Substituenten mit 5 bis 7 Ringgliedern, enthalten. Für die Verwendung im Umfang vorliegender Erfindung sind insbesondere Polyvinylcaprolactam, Polyvinylpyrrolidon und Hydroxyethylcellulose geeignet.

Besonders geeignet sind auch Mischungen der erfindungsgemäßen Polymere mit Gashydratinhibitoren auf Maleinsäureanhydridbasis, wie sie in WO-A-97/07320 beschrieben sind, insbesondere mit Mono- und/oder Diaminen umgesetzten Maleinsäureanhydridcopolymere. Hierunter sind insbesondere modifizierte Vinylacetat-Maleinsäureanhydrid-Copolymere besonders bevorzugt.

In einer weiteren bevorzugten Ausführungsform der Erfindung werden die erfindungsgemäßen Gashydratinhibitoren in Mischung mit anderen Polymeren, enthaltend zwischen 1 und 100 Mol-% Struktureinheiten der Formel 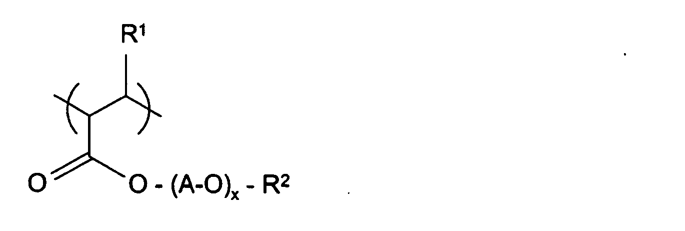 worin
- R¹: Wasserstoff oder C₁-C₆-Alkyl
- R²: C₁-C₂₄-Alkyl, C₂-C₂₄-Alkylen oder ein C₆-C₁₈-Arylrest, der mit einer C₁-C₁₂-Alkylgruppe substituiert sein kann,
- A: gleichartige oder verschiedene C₂-C₄-Alkylenreste und
- x: eine ganze Zahl von 2 - 40 bedeuten,
in Mengen von 0,01 bis 2 Gew.-%, bezogen auf die Wasserphase verwendet.

Werden Mischungen verwendet, so betragen die Konzentrationsverhältnisse zwischen den erfindungsgemäßen Gashydratinhibitoren und den zugemischten Komponenten von 90:10 bis 10:90 Gewichtsprozente, vorzugsweise werden Mischungen in den Verhältnissen 75:25 bis 25:75 und insbesondere 60:40 bis 40:60 verwendet.

Die Verbindungen können, ebenso wie ihre Mischungen mit anderen Gashydratinhibitoren, bei der Erdöl- und Erdgasförderung oder der Bereitung von Bohrspülungen mittels gängiger Ausrüstung, wie Injektionspumpen o. ä. dem für die Hydratbildung anfälligen Mehrphasengemisch zugegeben werden, aufgrund der guten Löslichkeit der erfindungsgemäßen Polymere ist eine schnelle und gleichmäßige Verteilung des Inhibitors in der zur Hydratbildung neigenden Wasserphase bzw. der Kondensatphase gegeben.

Da die Inhibitoren primär die Keimbildung und das Wachstum von Hydratkeimen verzögern oder die Agglomeration verhindern, wird die Zugabe des Inhibitors bevorzugt erfolgen, bevor Gashydratbildung auftritt, d.h. noch oberhalb der Gleichgewichtstemperatur der Hydratbildung. Dies ist beispielsweise gegeben, wenn man den Inhibitor z.B. direkt an der Erdgasquelle oder am Beginn der zu inhibierenden Pipeline zusetzt.

### Beispiele

Zur Untersuchung der inhibierenden Wirkung der Polymere wurde ein Stahlrührautoklav mit Temperatursteuerung, Druck- und Drehmomentaufnehmer mit 450 ml Innenvolumen benutzt, der mit destilliertem Wasser und Gas im Volumenverhältnis 20:80 gefüllt wurde. Für Untersuchungen der Agglomeratinhibierung wurde zusätzlich Kondensat zugegeben. Anschließend wurden 90 bar Erdgas aufgedrückt.

Ausgehend von einer Anfangstemperatur von 17,5°C wurde innerhalb 2 h auf 2°C abgekühlt, dann 18 h bei 2°C gerührt und innerhalb von 2 h wieder auf 17,5°C aufgeheizt. Dabei wird zunächst eine Druckabnahme gemäß der thermischen Kompression des Gases beobachtet. Tritt während der Unterkühlzeit die Bildung von Gashydratkeimen auf, so verringert sich der gemessene Druck, wobei ein Anstieg des gemessenen Drehmoments und leichter Anstieg der Temperatur zu beobachten ist. Weiteres Wachstum und zunehmende Agglomeration der Hydratkeime führt ohne Inhibitor schnell zu einem weiteren Anstieg des Drehmomentes. Beim Aufwärmen des Gemisches zerfallen die Gashydrate, so dass man den Anfangszustand der Versuchsreihe erreicht.

Als Maß für die inhibierende Wirkung des Additives wird die Zeit vom Erreichen der Minimaltemperatur von 2°C bis zur ersten Gasaufnahme (T_{ind}) benutzt. Lange Induktionszeiten weisen auf eine Wirkung als kinetischer Inhibitor hin. Der Druckabfall und Temperaturanstieg spiegeln die Menge an gebildeten Hydratkristallen wider. Das im Autoklaven gemessene Drehmoment dient dagegen als Größe für die Agglomeration der Hydratkristalle. Bei einem guten Antiagglomerant ist das Drehmoment, das sich nach Bildung von Gashydraten aufbaut, gegenüber dem Blindwert deutlich verringert. Im Idealfall bilden sich schneeartige, feine Hydratkristalle in der Kondensatphase, die sich nicht zusammenlagern und somit nicht zum Verstopfen der zum Gastransport und zur Gasförderung dienenden Installationen führen.

Im folgenden werden zunächst die Herstellung der erfindungsgemäßen Additivbestandteile und dann deren Wirksamkeit als Gashydratinhibitor beschrieben.

### Beispiel 1:

In einem 2 I Autoklaven wurden 885 g Glykolsäure (70 %) und 1.021 g Isobutylamin vorgelegt und 6 h bei 200°C erhitzt. Anschließend das entstandene Reaktionswasser/Amin-Gemisch bei 140°C im Vakuum abdestilliert.

### Beispiel 2:

In einem 500 ml Vierhalskolben wurden 172 g γ-Butyrolacton vorgelegt und 146 g Isobutylamin langsam zudosiert. Anschließend wurde allmählich auf 80 - 150°C hochgeheizt, so dass der Ansatz am Rückfluss siedet. Die Reaktionsmischung wurde solange bei 150°C nachgerührt, bis kein Rückfluss mehr zu beobachten war (ca. 2 h).

### Beispiel 3:

In einem 500 ml Vierhalskolben wurden 172 g γ-Butyrolacton vorgelegt und 170 g Cyclopentylamin langsam zudosiert. Anschließend wurde allmählich auf 80 - 150°C hochgeheizt, so dass der Ansatz am Rückfluss siedet. Die Reaktionsmischung wurde solange bei 150°C nachgerührt, bis kein Rückfluss mehr zu beobachten war (ca. 2 h).

### Beispiel 4:

In einem 500 ml Vierhalskolben wurden 172 g γ-Butyrolacton vorgelegt und 198 g Cyclohexylamin langsam zudosiert. Anschließend wurde allmählich auf 80 - 150°C hochgeheizt, so dass der Ansatz am Rückfluss siedet. Die Reaktionsmischung wurde solange bei 150°C nachgerührt, bis kein Rückfluss mehr zu beobachten war (ca. 2 h).

### Beispiel 5:

In einem 500 ml Vierhalskolben wurden 172 g ε-Caprolacton vorgelegt und 146 g Isobutylamin langsam zudosiert. Anschließend wurde allmählich auf 80 - 150°C hochgeheizt, so dass der Ansatz am Rückfluss siedet. Die Reaktionsmischung wurde solange bei 150°C nachgerührt, bis kein Rückfluss mehr zu beobachten war (ca. 4 h).

### Beispiel 6:

In einem 2 I Autoklaven wurden 656 g Glykolsäureisobutylamid vorgelegt und unter Alkali-Katalyse bei 150°C bis maximal 4 bar mit der entsprechenden Menge EO begast. Es wurde 1 Stunde bei 4,5 bar Stickstoffdruck nachreagiert.

### Beispiel 7:

In einem 100 ml Vierhalskolben wurden 49,2 g Glykolsäureisobutylamidtriethoxylat und 20,4 g Essigsäureanhydrid vorgelegt und unter Stickstoffspülung und Rückfluss 5 h erwärmt. Anschließend wurde die entstandene Essigsäure unter Vakuum (4 mbar) abdestilliert.

### Beispiel 8:

In einem 100 ml Vierhalskolben wurden 49,2 g Glykolsäureisobutylamidtriethoxylat und 26 g Propionsäureanhydrid vorgelegt und unter Stickstoffspülung und Rückfluss 5 h erwärmt. Anschließend wurde die entstandene Propionsäure unter Vakuum (4 mbar) abdestilliert.

### Beispiel 9:

In einem 250 ml Vierhalskolben wurden 49,2 g Glykolsäureisobutylamidtriethoxylat und 25 g Propionsäure (Überschuss) in 50 g Shellsol^{®} 100/140 (hauptsächlich aliphatische Lösemittelgemische in verschiedenen Siedebereichen) vorgelegt. Dazu wurden 0,1 g p-Toluolsulfonsäure gegeben und die Reaktionsmischung unter Rückfluss 2 h erwärmt. Anschließend wurde das entstandene Reaktionswasser vollständig ausgekreist und das Lösungsmittel und nicht umgesetzte Propionsäure unter Vakuum (4 mbar) abdestilliert.

### Beispiel 10:

In einem 250 ml Vierhalskolben wurden 50,4 g Glykolsäureisobutylamidpentaethoxylat und 25 g Propionsäure (Überschuss) in 50 g Shellsol 100/140 vorgelegt. Dazu wurden 0,1 g p-Toluolsulfonsäure gegeben und die Reaktionsmischung unter Rückfluss 2 h erwärmt. Anschließend wurde das entstandene Reaktionswasser vollständig ausgekreist und das Lösungsmittel und nicht umgesetzte Propionsäure unter Vakuum (4 mbar) abdestilliert.

### Beispiel 11:

In einem 100 ml Vierhalskolben wurden 49,2 g Glykolsäureisobutylamidtriethoxylat und 43,2 g 2-Ethylhexansäure vorgelegt und nach Zugabe von 0,5 g FASCAT unter Stickstoffspülung und Rückfluss 2 h erwärmt. Dann wurde das entstehende Reaktionswasser kontinuierlich abdestilliert.

### Beispiel 12:

In einem 100 ml Vierhalskolben wurden 49,2 g Glykolsäureisobutylamidtriethoxylat und 84,6 g Ölsäure vorgelegt und nach Zugabe von 0,5 g FASCAT unter Stickstoffspülung und Rückfluss 2 h erwärmt. Dann wurde das entstehende Reaktionswasser kontinuierlich abdestilliert.

### Beispiel 13:

In einem 100 ml Vierhalskolben wurden 50,4 g Glykolsäureisobutylamidpentaethoxylat und 20,4 g Essigsäureanhydrid vorgelegt und unter Stickstoffspülung und Rückfluss 5 h erwärmt. Anschließend wurde die entstandene Essigsäure unter Vakuum (4 mbar) abdestilliert.

### Beispiel 14:

In einem 100 ml Vierhalskolben wurden 50,4 g Glykolsäureisobutylamidpentaethoxylat und 26,0 g Propionsäureanhydrid vorgelegt und unter Stickstoffspülung und Rückfluss 5 h erwärmt. Anschließend wurde die entstandene Essigsäure unter Vakuum (4 mbar) abdestilliert.

### Beispiel 15:

In einem 100 ml Vierhalskolben wurden 50,4 g Glykolsäureisobutylamidpentaethoxylat und 43,2 g 2-Ethylhexansäure vorgelegt und nach Zugabe von 0,5 g FASCAT unter Stickstoffspülung und Rückfluss 2 h erwärmt. Dann wurde das entstehende Reaktionswasser kontinuierlich abdestilliert.

### Beispiel 16:

In einem 100 ml Vierhalskolben wurden 50,4 g Glykolsäureisobutylamidpentaethoxylat und 84,6 g Ölsäure vorgelegt und nach Zugabe von 0,5 FASCAT unter Stickstoffspülung und Rückfluss 2 h erwärmt. Dann wurde das entstehende Reaktionswasser kontinuierlich abdestilliert.

### Beispiel 17:

In einem 100 ml Vierhalskolben wurden 60,1 g Hydroxybuttersäureisobutylamidtriethoxylat und 20,4 g Essigsäureanhydrid vorgelegt und unter Stickstoffspülung und Rückfluss 5 h erwärmt. Anschließend wurde die entstandene Essigsäure unter Vakuum (4 mbar) abdestilliert.

### Beispiel 18:

In einem 100 ml Vierhalskolben wurden 63,5 g Hydroxybuttersäurecyclohexylamidtriethoxylat und 20,4 g Essigsäureanhydrid vorgelegt und unter Stickstoffspülung und Rückfluss 5 h erwärmt. Anschließend wurde die entstandene Essigsäure unter Vakuum (4 mbar) abdestilliert.

### Beispiel 19:

In einem 250 ml Becherglas wurden 50 g Additiv nach Beispiel 11 mit 50 g Polyvinylcaprolactam (Vergleich) in 100 g Butylglykol formuliert.

### Beispiel 20:

In einem 250 ml Becherglas wurden 50 g Additiv nach Beispiel 18 mit 50 g Polyvinylcaprolactam (Vergleich) in 100 g Butylglykol formuliert.

### Testergebnisse

**Tabelle 1: Zusammensetzung und Eigenschaften der verwendeten Erdgase**

| | Gas 1 | Gas 2 |
|---|---|---|
| Methan | 79,3 | 92,1 |
| Ethan | 10,8 | 3,5 |
| Propan | 4,8 | 0,8 |
| Butan | 1,9 | 0,7 |
| Kohlendioxid | 1,4 | 0,6 |
| Stickstoff | 1,8 | 2,3 |
| T₁ | 12°C | 7°C |
| T₂ | 18°C | 12°C |

| | | |
|---|---|---|
| T₁ und T₂ sind die Unterkühlungen unter die Gleichgewichtstemperatur der Hydratbildung bei 50 und 100 bar. | | |

Als Vergleichssubstanz wurde eine Lösung von Polyvinylcaprolactam (PVCap) in Butylglykol herangezogen, Molekulargewicht 5.000 g/mol.

Die Additive wurden in einer Konzentration von 5.000 ppm eingesetzt.

**Tabelle 2: Wirksamkeit der Additive als Gashydratinhibitoren**

| Beispiel Nr. | Additiv gemäß Beispiel Nr. | Gas | Druck p (bar) | T_{ind} | Druckverlust Δ p (bar) | Temperaturanstieg Δ T (K) |
|---|---|---|---|---|---|---|
| 21(V) | ohne | 1 | 50 | 0 | > 40 | > 1,5 |
| 22(V) | ohne | 2 | 100 | 0 | >40 | > 1,5 |
| 23 | 7 | 1 | 50 | < 5 min | 27,0 | 0,3 |
| 24 | 7 | 2 | 100 | < 5 min | 22,0 | 0,25 |
| 25 | 8 | 1 | 50 | < 5 min | 17,4 | 0,2 |
| 26 | 8 | 2 | 50 | < 5 min | 0,8 | 0 |
| 27 | 8 | 2 | 100 | < 5 min | 7,1 | 0,1 |
| 28 | 11 | 1 | 50 | 120 min | 0,1 | 0 |
| 29 | 11 | 2 | 100 | < 5 min | 4,0 | 0,1 |
| 30 | 13 | 1 | 50 | < 5 min | 20,1 | 0,2 |
| 31 | 14 | 1 | 50 | < 5 min | 23,0 | 0,25 |
| 32 | 17 | 1 | 50 | 20 min | 5,8 | 0,1 |
| 33 | 17 | 2 | 100 | 30 min | 10,8 | 0,2 |
| 34 | 18 | 1 | 50 | < 5 min | 13,1 | 0,3 |
| 35 | 19 | 1 | 50 | 70 min | 4,3 | 0,1 |
| 36 | 20 | 1 | 50 | 40 min | 5,4 | 0,1 |
| 37(V) | PVCap | 1 | 50 | < 5 min | 10,0 | 0,4 |
| 38(V) | PVCap | 2 | 100 | < 5 min | 6,0 | 0,1 |

Wie aus den obigen Testresultaten zu erkennen ist, wirken die erfindungsgemäßen Produkte, vor allem die mit kurzen Alkylresten R¹ und relativ zum Alkylrest hohem Ethoxylierungsgrad als kinetische Hydratinhibitoren und zeigen eine deutliche Verbesserung gegenüber dem Stand der Technik. Sie können ebenfalls zur Steigerung (Synergieeffekt) der Leistungsfähigkeit von Inhibitoren des Standes der Technik verwendet werden.

Um die Wirkung als Agglomeratinhibitoren zu prüfen, wurde im oben verwendeten Testautoklaven Wasser und Testbenzin vorgelegt (20 % des Volumens im Verhältnis 1:2) und bezogen auf die Wasserphase 5.000 ppm des jeweiligen Additivs zugegeben.

Bei einem Autoklavendruck von 90 bar unter Verwendung von Gas 1 und einer Rührgeschwindigkeit von 5.000 U/min wurde die Temperatur von anfangs 17,5°C innerhalb 2 Stunden auf 2°C abgekühlt, dann 25 Stunden bei 2°C gerührt und wieder aufgewärmt. Dabei wurde der Druckverlust durch die Hydratbildung und das dabei auftretende Drehmoment am Rührer gemessen, das ein Maß für die Agglomeration der Gashydrate ist.

**Tabelle 3: Auftretende Drehmomente**

| Beispiel Nr. | Additiv gemäß Beispiel Nr. | Druckverlust Δ p (bar) | Temperaturanstieg Δ T (K) | Drehmoment Mₘₐₓ (Ncm) |
|---|---|---|---|---|
| 39(V) | ohne | > 40 | > 8,0 | 15,9 |
| 40 | 11 | 13,4 | 0,2 | 0,3 |
| 41 | 12 | 22,1 | 2,5 | 1,2 |
| 42 | 15 | 25,3 | 5,3 | 8,8 |
| 43 | 16 | 16,8 | 0,8 | 0,9 |
| 44(V) | TBAB | 21,5 | 1,0 | 1,5 |
| 45(V) | TBAB | 15,0 | 1,0 | 1,2 |

Als Vergleichssubstanz wurden zwei kommerziell erhältliche Antiagglomerant-Inhibitoren auf Basis Tetrabutylammoniumbromid (TBAB) herangezogen.

Wie aus diesen Beispielen zu ersehen ist, waren die gemessenen Drehmomente im Vergleich zum Blindwert trotz heftiger Hydratbildung stark reduziert. Dies spricht für eine deutliche agglomeratinhibierende Wirkung der erfindungsgemäßen Produkte.

## Patentansprüche

1. Verwendung von Verbindungen der Formel (1) 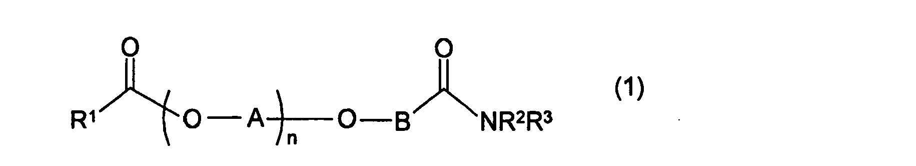 worin
R¹ C₁- bis C₂₄-Alkyl, C₂- bis C₂₄-Alkenyl oder einen C₆- bis C₁₈-Arylrest, der mit einer C₁- bis C₁₂-Alkylgruppe substituiert sein kann,
R², R³ unabhängig voneinander Wasserstoff, C₁- bis C₁₈-Alkyl, C₅- bis C₇-Cycloalkyl, oder R² und R³, unter Einschluss des Stickstoffatoms, an das sie gebunden sind, einen Ring von 4 bis 8 Ringatomen, in dem außer Kohlenstoff auch Sauerstoff- oder Stickstoffatome enthalten sein können,
A gleichartige oder verschiedene C₂- bis C₄-Alkylenreste,
B C₁- bis C₇-Alkylen,
n eine ganze Zahl von 1 - 40
bedeuten, als Gashydratinhibitoren.

2. Verwendung nach Anspruch 1, wobei R¹ C₁- bis C₈-Alkyl bedeutet.

3. Verwendung nach Anspruch 1, wobei R¹ C₈- bis C₂₄-Alkyl bedeutet.

4. Verwendung nach einem oder mehreren der Ansprüche 1 bis 3, wobei R² und R³ unabhängig voneinander Wasserstoff oder C₁- bis C₄-Alkyl bedeuten.

5. Verwendung nach einem oder mehreren der Ansprüche 1 bis 4, wobei A für einen Ethylenrest steht.

6. Verwendung nach einem oder mehreren der Ansprüche 1 bis 5, wobei B für eine Methylen-, Ethylen- oder Propylengruppe steht.

7. Verwendung nach einem oder mehreren der Ansprüche 1 bis 6, wobei n eine Zahl von 2 bis 10 bedeutet.

8. Additiv zur Inhibierung der Gashydratbildung, umfassend eine Verbindung der Formel (1) gemäß einem oder mehreren der Ansprüche 1 bis 7.

9. Additiv zur Inhibierung der Gashydratbildung gemäß Anspruch 8, umfassend
A) eine Verbindung der Formel (1) 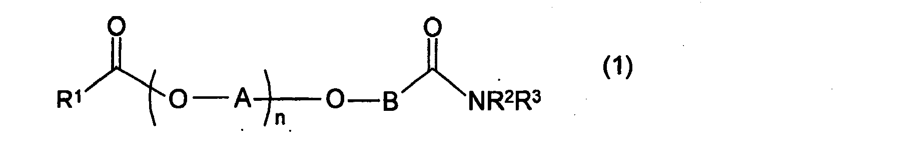 worin
R¹ C₁- bis C₂₄-Alkyl, C₂- bis C₂₄-Alkenyl oder einen C₆- bis C₁₈-Arylrest, der mit einer C₁- bis C₁₂-Alkylgruppe substituiert sein kann,
R², R³ unabhängig voneinander Wasserstoff, C₁- bis C₁₈-Alkyl, C₅- bis C₇-Cycloalkyl, oder R² und R³, unter Einschluss des Stickstoffatoms, an das sie gebunden sind, einen Ring von 4 bis 8 Ringatomen, in dem außer Kohlenstoff auch Sauerstoff- oder Stickstoffatome enthalten sein können,
A gleichartige oder verschiedene C₂- bis C₄-Alkylenreste,
B C₁- bis C₇-Alkylen,
n eine ganze Zahl von 1 - 40
bedeuten, und
B) wenigstens ein wasserlösliches Polymer, ausgewählt aus der Gruppe bestehend aus Polyisopropylacrylamid, Polyacryloylpyrrolidin, Polyvinylcaprolactam, Polyvinylpyrrolidon, Copolymeren aus Vinylcaprolactam mit Vinylpyrrolidon, N-Vinyl-N-Methylacetamid oder alkoxyalkylsubstituierte (Meth)Acrylsäureester und Copolymeren, die Struktureinheiten von Maleinsäure oder deren Anhydrid oder Amidderivate enthalten.

## Claims

1. The use of compounds of the formula (1) 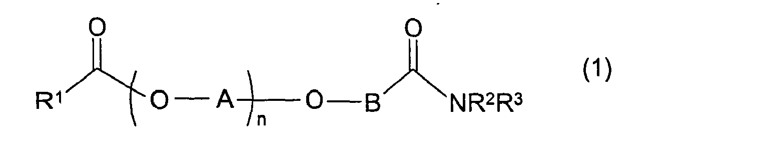 in which
R¹ is C₁- to C₂₄-alkyl, C₂- to C₂₄-alkenyl or a C₆- to C₁₈-aryl radical which may be substituted by a C₁- to C₁₂-alkyl group,
R², R³ independently of one another, are hydrogen, C₁-to C₁₈-alkyl, or C₅-to C₇-cycloalkyl, or R² and R³, including the nitrogen atom to which they are bonded, form a ring of 4 to 8 ring atoms, in which oxygen or nitrogen atoms may also be present in addition to carbon,
A are identical or different C₂- to C₄-alkylene radicals,
B is C₁- to C₇-alkylene, and
n is an integer from 1 - 40,
as gas hydrate inhibitors.

2. The use as claimed in claim 1, R¹ being C₁- to C₈-alkyl.

3. The use as claimed in claim 1, R¹ being C₈- to C₂₄-alkyl.

4. The use as claimed in one or more of claims 1 to 3, R² and R³, independently of one another, being hydrogen or C₁- to C₄-alkyl.

5. The use as claimed in one or more of claims 1 to 4, A being an ethylene radical.

6. The use as claimed in one or more of claims 1 to 5, B being a methylene, ethylene or propylene group.

7. The use as claimed in one or more of claims 1 to 6, n being a number from 2 to 10.

8. An additive for inhibiting gas hydrate formation, comprising a compound of the formula (1) as claimed in one or more of claims 1 to 7.

9. An additive for inhibiting gas hydrate formation as claimed in claim 8, comprising
A) a compound of the formula (1) 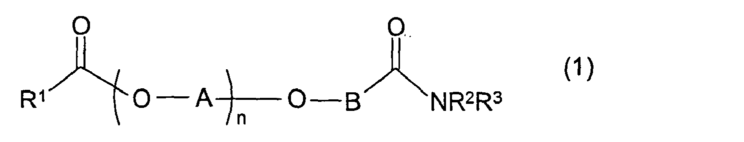 in which
R¹ is C₁- to C₂₄-alkyl, C₂- to C₂₄-alkenyl or a C₆- to C₁₈-aryl radical which may be substituted by a C₁- to C₁₂-alkyl group,
R², R³ independently of one another, are hydrogen, C₁- to C₁₈-alkyl, or C₅-to C₇-cycloalkyl, or R² and R³, including the nitrogen atom to which they are bonded, form a ring of 4 to 8 ring atoms, in which oxygen or nitrogen atoms may also be present in addition to carbon,
A are identical or different C₂- to C₄-alkylene radicals,
B is C₁- to C₇-alkylene, and
n is an integer from 1 - 40,
and
B) at least one water-soluble polymer selected from the group consisting of polyisopropylacrylamide, polyacryloylpyrrolidine, polyvinylcaprolactam, polyvinylpyrrolidone, copolymers of vinylcaprolactam with vinylpyrrolidone, N-vinyl-N-methylacetamide, or alkoxyalkyl-substituted (meth)acrylic esters and copolymers which contain structural units of maleic acid or its anhydride or amide derivatives.

## Revendications

1. Utilisation de composés de formule (1) 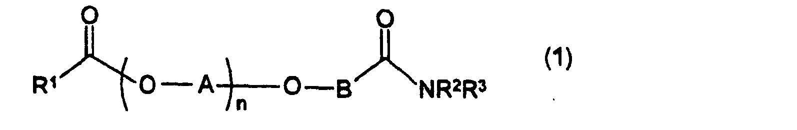 dans laquelle
R¹ représente un radical alkyle en C₁ à C₂₄, alcényle en C₂ à C₂₄ ou aryle en C₆ à C₁₈, qui peut être substitué par un groupe alkyle en C₁ à C₁₂,
R², R³ , indépendamment l'un de l'autre, représentent un atome d'hydrogène, un radical alkyle en C₁ à C₁₈, cycloalkyle en C₅ à C₇, ou R² et R³, y compris l'atome d'azote auquel ils sont liés, représentent un cycle de 4 à 8 chaînons, dans lequel peuvent être également contenus, en dehors des atomes de carbone, des atomes d'oxygène ou d'azote,
A représente des radicaux alkylène en C₂ à C₄ identiques ou différents,
B représente un radical alkylène en C₁ à C₇,
n est un entier de 1 à 40,
en qu'inhibiteurs d'hydrates de gaz.

2. Utilisation selon la revendication 1, R¹ représente un radical alkyle en C₁ à C₈.

3. Utilisation selon la revendication 1, R¹ représente un radical alkyle en C₈ à C₂₄.

4. Utilisation selon une ou plusieurs des revendications 1 à 3, R² et R³ , indépendamment l'un de l'autre, représentent un atome d'hydrogène ou un radical alkyle en C₁ à C₄.

5. Utilisation selon une ou plusieurs des revendications 1 à 4, où A représente un radical éthylène.

6. Utilisation selon une ou plusieurs des revendications 1 à 5, où B représente un groupe méthylène, éthylène ou propylène.

7. Utilisation selon une ou plusieurs des revendications 1 à 6, où n est un entier de 2 à 10.

8. Additif pour l'inhibition de la formation d'hydrates de gaz, comprenant un composé de formule (1) selon une ou plusieurs des revendications 1 à 7.

9. Additif pour l'inhibition de la formation d'hydrates de gaz selon la revendication 8, comprenant
A) un composé de formule (1) 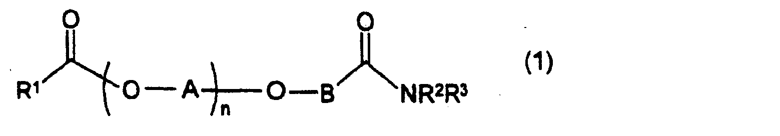 dans laquelle
R¹ représente un radical alkyle en C₁ à C₂₄, alcényle en C₂ à C₂₄ ou aryle en C₆ à C₁₈, qui peut être substitué par un groupe alkyle en C₁ à C₁₂,
R², R³, indépendamment l'un de l'autre, représentent un atome d'hydrogène, un radical alkyle en C₁ à C₁₈, cycloalkyle en C₅ à C₇, ou R² et R³, y compris l'atome d'azote auquel ils sont liés, représentent un cycle de 4 à 8 chaînons, dans lequel peuvent être également contenus, en dehors des atomes de carbone, des atomes d'oxygène ou d'azote,
A représente des radicaux alkylène en C₂ à C₄ identiques ou différents,
B représente un radical alkylène en C₁ à C₇,
n est un entier de 1 à 40,
et
B) au moins un polymère hydrosoluble, choisi dans le groupe constitué par le polyisopropylacrylamide, la polyacryloylpyrrolidine, le polyvinylcaprolactame, la polyvinylpyrrolidone, les copolymères de vinylcaprolactame avec la vinylpyrrolidone, le N-vinyl-N-méthylacétamide ou les esters de l'acide (méth)acrylique substitués par un substituant alkoxyalkyle et les copolymères qui contiennent des motifs acide maléique ou de son anhydride ou des dérivés d'amides.
